# FASCICULE DE BREVET EUROPEEN

(11) **EP 3 946 974 B1**
(45) Date de publication et mention de la délivrance du brevet: **16.08.2023**
(21) Numéro de dépôt: 20731386.7
(22) Date de dépôt: 24.03.2020
(51) Int. Cl.: B60C 9/28, B60C 15/00, B60C 15/05, B60C 15/06, B60C 9/20, B60C 11/03

(54) **PNEUMATIQUE AYANT DES ARCHITECTURES SOMMET ET BOURRELET OPTIMISEES**
LUFTREIFEN MIT OPTIMIERTEN KRONEN- UND WULSTARCHITEKTUREN
PNEUMATIC TYRE WITH OPTIMISED CROWN AND BEAD ARCHITECTURES

(30) Priorité: 05.04.2019 FR 1903683
(43) Date de publication de la demande: 09.02.2022
(73) Titulaire: COMPAGNIE GENERALE DES ETABLISSEMENTS MICHELIN, 63000 Clermont-Ferrand (FR)
(72) Inventeur: FABING, Daniel, 63040 Clermont-Ferrand Cedex 9 (FR); FRAYSSE, Patrice, 63040 Clermont-Ferrand Cedex 9 (FR); TOBIE, Alexandre, 63040 Clermont-Ferrand Cedex 9 (FR); BRUNEAU, François-Xavier, 63040 Clermont-Ferrand Cedex 9 (FR); PALLOT, Patrick, 63040 Clermont-Ferrand Cedex 9 (FR)
(74) Mandataire: Desbordes, Guillaume
(86) Numéro de dépôt international: PCT/EP2020/025141
(87) Numéro de publication internationale: WO 2020/200517

(56) Documents cités:
- WO-A1-2018/011510
- FR-A1- 3 057 810
- FR-A1- 3 057 812
- JP-A- 2011 031 841

## Description

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie, « pour chaque méridien, radialement intérieur dans la limite des coordonnées axiales délimitées par ». Ainsi « les points d'une couche de travail à l'aplomb d'une rainure » désignent pour chaque méridien, l'ensemble des points de la couche de travail radialement intérieurs à la rainure dans la limite des coordonnées axiales délimitées par la rainure.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets. Les bourrelets comprennent des enroulements circonférentiels de fils métalliques, nommés tringles configurés afin de maintenir le pneumatique sur la roue de montage une fois le pneumatique monté sur ladite roue et gonflé.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par les points les plus radialement extérieurs de chaque élément de renforcement, de chaque méridien. Pour toute couche d'éléments de renforcement d'armature de sommet, de travail, ou autre, une surface continue, dite surface radialement intérieure (SRI) de la dite couche, passe par les points le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une rainure présente, sur la surface de roulement, deux dimensions principales caractéristiques : une largeur W et une longueur Lo, telle que la longueur Lo est au moins égale à 2 fois la largeur W.

Un sillon circonférentiel est une rainure de forte largeur Ws au moins égale à 6 mm faisant localement un angle avec la direction circonférentielle au plus égal à 45° et formant un espace débouchant sur toute la circonférence du pneumatique. Dans de nombreuses variantes de pneumatiques, l'angle formé par les sillons circonférentiels avec la direction circonférentielle est constant et nul sur toute la circonférence. Dans d'autres variantes, certains sillons sont des suites continues sur toute la circonférence de rainures de différents angles et dont la continuité forme un espace débouchant sur toute la circonférence du pneumatique.

La profondeur de la découpure est la distance radiale maximale entre la surface de roulement et le fond de la découpure. La valeur maximale des profondeurs des découpures est nommée profondeur de sculpture D.

Selon leurs dispositions circonférentielles ou transversales, les rainures et les sillons circonférentiels déterminent des blocs ou des nervures de matériaux caoutchouteux dans la bande de roulement. Un matériau caoutchouteux, un composé caoutchouteux désignent un matériau élastique comportant au moins un élastomère et au moins une charge. Une gomme de bourrage comprend au moins un caoutchouteux.

Un pneumatique doit répondre à de multiples critères de performance portant sur des phénomènes comme l'usure, l'adhérence sur différents types de sol, la résistance au roulement, le comportement dynamique, le bruit. Ces critères de performance conduisent parfois à des solutions s'opposant à d'autres critères. Ainsi les documents FR3057810 et FR3057811 divulguent des pneumatiques dont les couches de sommet sont ondulées. Ces ondulations permettent d'augmenter la rigidité transversale du couplage entre l'armature de sommet et la bande de roulement. En fonction des matériaux de la bande de roulement choisis, onduler les couches de sommet permet d'améliorer la performance en comportement du pneumatique, d'améliorer ses performances en adhérence et plus particulièrement d'adhérence sol sec, en résistance au roulement, sans modifier ses performances en usure et en endurance du sommet.

Les bourrelets et les flancs classiques des pneumatiques de tourisme ne sont pas optimisés pour de telles architectures de sommet. Or il convient d'adapter les rigidités relatives de ces deux autres composants afin d'obtenir un pneumatique aux performances optimales. Des bourrelets et des flancs n'ayant pas été optimisés fléchissent trop et réduisent le gain maximal en comportement, en adhérence selon le gain visé avec la technologie des couches de sommet ondulés.

On connait également de l'état de la technique le document JP2011031841.

L'objectif principal de la présente invention est donc d'améliorer l'équilibre des performances entre le comportement et la résistance au roulement des pneumatiques, plus particulièrement des pneumatiques ayant au moins une couche de sommet ondulée telle que configurée dans l'état de l'art, en créant un effet de poutre dans le bourrelet et dans le flanc.

Cet objectif est atteint par un pneumatique de tourisme comprenant :
- une bande de roulement destinée à entrer en contact avec un sol par l'intermédiaire d'une surface de roulement d'une largeur axiale L et comprenant une partie centrale de la bande de roulement d'une largeur égale à 0,8*L, cette partie centrale de la bande de roulement comprenant au moins deux sillons circonférentiels,
- une armature de sommet, radialement intérieure à la bande de roulement, comprenant au moins une couche de sommet, la ou les couches de sommet étant des couches d'éléments de renforcement, l'armature de sommet comprenant une armature de travail, comprenant au moins une couche de travail, chaque couche de travail comprenant des éléments de renforcement, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
   chaque couche de sommet s'étendant radialement depuis une surface radialement intérieure (SRI) jusqu'à une surface radialement extérieure (SRE),
   la couche de sommet la plus radialement extérieure à l'aplomb de la partie centrale de la bande de roulement comprenant au moins une ondulation dite ondulation centrale, d'amplitude radiale A, au moins égale à 1 mm, l'amplitude radiale A étant mesurée dans un plan méridien,
   une ondulation centrale de la couche de sommet la plus radialement extérieure est telle que la portion de la surface radialement extérieure (SRE) de la couche de sommet de ladite ondulation centrale est radialement extérieure aux points de la couche de sommet la plus radialement extérieure à l'aplomb de la face de fond du sillon circonférentiel le plus proche de ladite ondulation,
- deux bourrelets (BE, BI) destinés à venir en contact avec une jante et deux flancs reliant le sommet aux bourrelets (BE, BI), chaque bourrelet (BE, BI) comprenant au moins une tringle comprenant des éléments circonférentiels de renforcement métallique,
- une couche de carcasse, radialement intérieure au sommet et reliant les deux bourrelets (BE, BI), la couche de carcasse comprenant des éléments de renforcement, textile enrobés par un matériau élastomérique, parallèles entre eux et formant avec la direction radiale (ZZ") du pneumatique, un angle dont la valeur absolue est au plus égale à 15°,
au moins un bourrelet (BE, BI) comprend un élément de renfort radial comprenant des éléments de renforcement textile enrobés par un matériau élastomérique, parallèles entre eux et formant avec la direction radiale (ZZ") du pneumatique, un angle dont la valeur absolue est au plus égale à 15°, dans ledit bourrelet (BE, BI), le point le plus radialement intérieur de l'élément de renfort radial étant à une distance radiale au plus égale à 20 mm du point le plus radialement intérieur de la tringle, et dans ledit bourrelet (BE, BI), un point de l'élément de renfort radial étant radialement extérieur et à une distance radiale au moins égale à de 40 mm du point le plus radialement intérieur de la tringle, la distance axiale entre l'élément de renfort radial et la couche de carcasse la plus axialement intérieure étant au moins égale à 1 mm et au plus égale à 12 mm au point de l'élément de renfort radial (95) situé à 30 mm du point le plus radialement intérieur de la tringle.

Dans les pneumatiques actuels présentant des sommets dont les couches de sommet sont ondulées, les tringles ont possiblement trois géométries. Dans un plan méridien, les tringles ont une section polygonale ou circulaire ou les tringles ont une section multilinéaire. Dans le contexte de l'invention, Il n'y a pas lieu de différencier les tringles à section polygonale des tringles à section circulaire.

Les tringles à section polygonale ou circulaire sont constituées d'éléments métalliques, fils unitaires, ou bandes de fils unitaires, enroulés en spirale jointive de sorte que la tringle constitue un tore de section polygonale, dont les côtés sont d'une longueur représentant plusieurs diamètres des fils métalliques élémentaires qui constituent la tringle. Dans ce cas, au moins une couche de carcasse présente un brin aller et un brin retour. Le brin aller relie les deux bourrelets et est axialement intérieur à la tringle, au niveau du rayon de ladite tringle. Une partie de la couche de carcasse est radialement intérieure à la dite tringle. Le brin retour est axialement extérieur à la tringle au niveau du rayon de ladite tringle. L'extrémité du brin retour est radialement extérieure au point le plus radialement extérieur de la tringle et accolée au brin aller pour les points radialement extérieurs à la tringle sur une longueur dite de couplage. Dans le pneumatique monté sur une roue et gonflé, la pression interne du pneumatique induit des efforts de traction sur le brin aller de la couche de carcasse qui relie les deux bourrelets et dont les points tendent à se déplacer vers des rayons plus élevés que pour leur position sans pression. Cette même tension tend à déplacer le brin retour vers des rayons inférieurs. Ces deux déplacements opposés cisaillent les mélanges entre les deux brins. Pour assurer l'endurance du pneumatique, il convient d'avoir une longueur de couplage entre le brin aller et le brin retour suffisante pour que les contraintes de cisaillement puissent s'équilibrer avec l'effort de tension sur la couche de carcasse.

Les tringles à section multilinéaire sont constituées d'au moins deux enroulements de fils métalliques élémentaires sensiblement parallèles à au moins une couche de carcasse. Dans une coupe méridienne, chacun de ces enroulements forment un alignement sensiblement parallèle aux éléments de renforcement de la couche de carcasse. Au moins une couche de carcasse étant au moins située entre les deux spirales de fils métalliques élémentaires. Dans ce cas une couche de carcasse n'a pas de brin retour et son extrémité est radialement intérieure au point le plus radialement extérieur de la tringle. L'effort de tension est dans ce cas repris par le cisaillement des composés caoutchouteux situés entre la couche de carcasse et les éléments de renforcement métalliques des enroulements.

Dans les deux cas, que les tringles soient de section polygonale, circulaire ou multilinéaire, pour obtenir un bourrelet et un flanc dont la rigidité est adaptée à un sommet dont les couches de sommet sont ondulées, il est nécessaire que dans la zone de flexion du bourrelet sur le crochet de la jante, le bourrelet se comporte comme une coque et possède une rigidité augmentée en flexion. Pour réaliser cette condition, il suffit qu'un élément de renfort radial constitue avec la couche de carcasse la plus radialement intérieure une coque en étant distant de la dite couche de carcasse d'une épaisseur axiale db au moins égale à 1 mm, de préférence au moins égale à 3 mm, de préférence au moins égale à 4 mm. La distance axiale db est mesurée sur une coupe méridienne depuis le point le plus axialement extérieur de la couche de carcasse la plus axialement intérieure jusqu'au point le plus axialement intérieur dudit élément de renfort radial.

La zone de flexion est située approximativement à 30 mm du point le plus radialement intérieur de la tringle, quelle que soit sa géométrie.

L'invention se prête peu aux pneumatiques configurés pour un usage en mode étendu, à savoir utilisable avec une pression interne au pneumatique inférieure à 1 bar. Ces pneumatiques sont en effet pourvus d'une gomme intérieure d'épaisseur variable, et d'une épaisseur de cette gomme élevée au niveau du flanc et du point le plus axialement extérieur du pneumatique. Cette surépaisseur donne de la rigidité radiale aux flancs mais génère une dégradation de la résistance au roulement ce qui n'est pas l'objectif de l'invention. Les pneumatiques selon l'invention, ont préférentiellement des gommes intérieures d'épaisseur au plus égale à 1.5 mm. Une autre caractéristique de ces pneumatiques selon l'invention est qu'ils ont une épaisseur de la gomme intérieure variant au plus de 30% d'un bourrelet à l'autre.

Les pneumatiques dont une partie de la couche de carcasse à l'aplomb de la partie centrale du sommet est radialement intérieure aux points de la couche de carcasse à l'aplomb de l'extrémité de la couche de sommet la plus radialement intérieure sont peu compatibles avec l'invention. Ces sommets présentent des ondulations de l'ensemble des couches de sommet et de carcasse mais d'une amplitude radiale supérieure à celles de l'invention et pour un objectif d'hydroplanage ou autre. Ce type de configuration ne répond pas aux définitions géométrique de l'invention ni ne résout le même problème technique. Ainsi avantageusement la partie de la couche de carcasse à l'aplomb de la partie centrale de la bande de roulement est radialement extérieure à tous les points de la couche de carcasse à l'aplomb des extrémités des couches de sommet.

Cet élément de renfort radial peut être soit une couche de renfort radial, soit le brin retour de la couche de carcasse la plus axialement intérieure, soit une deuxième couche de carcasse reliant les deux bourrelets, ou tout autre élément de renfort radial. Il convient qu'au moins un point de cet élément de renfort radial soit radialement intérieur au point le plus radialement extérieur de la tringle, ou que le point le plus radialement intérieur de l'élément de renfort radial soit radialement intérieur à une distance radiale au plus égale à de 20 mm du point le plus radialement intérieur de la tringle et qu'un autre point du dudit élément de renfort soit radialement extérieur du point le plus radialement intérieur de la tringle et à une distance radiale dudit point au moins égale à 40 mm.

La couche de sommet la plus radialement extérieure doit comporter une ondulation. Ces ondulations ont une amplitude radiale au moins égale à 1 mm, de préférence au moins égale à 1.5 mm, de préférence au moins égale à 2 mm. Plus l'ondulation est de forte amplitude radiale plus l'impact sur la rigidité du pneumatique est important et plus les performances en résistance au roulement, en comportement, en adhérence associées à cette architecture sont importants. Plus l'amplitude radiale de ces ondulations est importante, plus il convient de rigidifier la zone de flexion. Néanmoins une distance db trop importante dégraderait la masse. Ainsi une solution préférée est qu'un élément de renfort radial constitue avec la couche de carcasse la plus radialement intérieure une coque en étant distant de la dite couche de carcasse d'une épaisseur axiale db au plus égale à 12 mm, de préférence au plus égale à 8 mm.

Dans le cas où le pneumatique est doté d'une indication de montage, à savoir qu'un de ses flancs est destiné à être positionné du côté extérieur d'un véhicule sur lequel la jante de montage est fixée, il est possible de n'avoir cet effet coque que pour un seul des bourrelets, celui destiné à être monté du côté extérieur du véhicule. C'est en effet ce flanc qui subit l'effort le plus important lors de l'utilisation du véhicule. Ainsi il est avantageux que lorsque l'un des bourrelets (BE) est destiné à être positionné du côté extérieur d'un véhicule sur lequel la jante de montage est fixée, le bourrelet (BE) destiné à être positionné du côté extérieur d'un véhicule sur lequel la jante de montage est fixée comprend un élément de renfort radial et la distance axiale entre l'élément de renfort radial et la couche de carcasse est au moins égale à 1 mm, de préférence au moins égale à 3 mm et au plus égale à 12 mm au point de l'élément de renfort radial situé à 30 mm du point le plus radialement intérieur de la tringle.

Une solution préférée est qu'une gomme de bourrage, dite gomme de bourrage bourrelet soit positionnée entre la couche de carcasse la plus axialement intérieure et l'élément de renfort radial, et notamment au niveau du point de flexion, à savoir au point de l'élément de renfort radial situé à 30 mm du point le plus radialement intérieur de la tringle. Cette gomme de bourrage bourrelet comprend au moins un composé caoutchouteux présentant un module d'extension sécant MA10 à 10 % de déformation, mesuré à 23° C selon la norme ASTM D 412, au moins égal à 5 MPa, de préférence au moins égal à 10 MPa. De préférence cette gomme de bourrage bourrelet, est d'une épaisseur axiale au moins égale à 1 mm, de préférence au moins égale à 3 mm et au plus égale à 12 mm, au point de l'élément de renfort radial situé à 30 mm du point le plus radialement intérieur de la tringle.

De préférence cette gomme de bourrage bourrelet, est d'une épaisseur axiale au moins égale à 4 mm et au plus égale à 8 mm, au point de l'élément de renfort radial situé à 30 mm du point le plus radialement intérieur de la tringle.

Avantageusement la gomme de bourrage bourrelet est constituée de 2 composés caoutchouteux, le premier composé caoutchouteux étant radialement intérieur au second composé caoutchouteux et le premier composé caoutchouteux présentant un module d'extension sécant MA10 à 10 % de déformation, mesuré à 23° C selon la norme ASTM D 412, au moins égal au module d'extension sécant MA10 à 10 % de déformation, mesuré à 23° C selon la norme ASTM D 412, du second composé caoutchouteux. Cette caractéristique permet de mieux répartir les cisaillements dans la gomme de bourrage et également de choisir des hystérèses différentes associées aux rigidités des matériaux. La gomme plus rigide et souvent de plus haute hystérèse est positionnée en dessous du point de flexion pour assurer la cohésion de cette partie peu déformée. Sur les points correspondants à la zone de flexion, un matériau plus souple et moins hystérétique facilite la mise à plat ce qui est favorable à la résistance au roulement.

Une solution préférée pour rigidifier davantage la zone de flexion est qu'au moins une couche de renfort bourrelet comprenant des éléments de renforcements, formant avec la direction radiale un angle en valeur absolue compris entre 10° et 60°, soit située entre la couche de carcasse et l'élément de renfort radial notamment au point de flexion du bourrelet, à savoir notamment au point de l'élément de renfort radial situé à 30 mm du point le plus radialement intérieur de la tringle. Ce renfort augmente la rigidité du bourrelet et du flanc dans la direction circonférentielle avec un matériau fibreux donc moins hystérétique et plus rigide que les composés caoutchouteux. Cette architecture est donc avantageuse pour la rigidité et la résistance au roulement. Ces renforts peuvent être soit en textile soit en métal, ou hybride.

Une solution préférée est que le point le plus radialement extérieur de la gomme de bourrage bourrelet est à une distance au moins égale à 30 mm du point le plus radialement intérieur de la tringle, de préférence au moins égale à 45 mm, afin d'augmenter la rigidité de la zone de flexion.

Pour des raisons de résistance à la traction, d'endurance, et de rigidité, les éléments de renforcement de la couche de carcasse et de l'élément de renfort radial sont de type polyamide aliphatique, polyamide aromatique, combinaison de polyamide aliphatique et de polyamide aromatique, polytéréphtalate d'éthylène ou rayonne.

Préférentiellement, la couche de carcasse est unique. Plus préférentiellement la couche de carcasse est unique et il n'existe qu'un unique élément de renfort radial. Cette solution permet d'obtenir un pneumatique léger donc performant en masse et optimal en résistance au roulement.

Préférentiellement, pour des marchés très sollicitant en endurance ou/et des pneumatiques nécessitant de fortes pression, l'armature de carcasse consiste en deux couches de carcasse. Plus préférentiellement, dans ce cas, les deux couches de carcasse sont situées sur les mêmes rayons pour tous les points axialement intérieurs au point le plus axialement extérieur des couches de sommet et radialement extérieurs au point le plus axialement extérieur du pneumatique afin de réduire l'épaisseur du sommet et donc la masse et la résistance au roulement.

Une solution préférée est que les points de l'élément de renfort radial les plus axialement intérieurs et radialement extérieurs au point le plus axialement extérieur du pneumatique, sont axialement intérieurs aux points les plus axialement extérieurs des couches de sommet et sur le même rayon que les éléments de renforcement de la couche de carcasse la plus radialement intérieure. Dans ce cas, les éléments de renforcement de l'élément de renfort radial, qu'il soit une couche de carcasse ou pas, double la couche de carcasse sur toute la hauteur du flanc au moins jusqu'à l'extrémité la plus axialement extérieure des couches de sommet quelle qu'elle soit. Ces points sont radialement extérieurs au point le plus axialement extérieur du pneumatique car cette caractéristique porte sur les points proches du sommet et non dans le bourrelet et qui pourraient éventuellement satisfaire la première caractéristique. L'élément de renfort radial est une couche de carcasse si il joint les deux bourrelets du pneumatique. Si l'élément de renfort radial présente une extrémité sous le sommet, alors il n'est pas une couche de carcasse. De plus, les éléments de renforcement de l'élément de renfort radial sont au niveau du sommet sur le même rayon que la couche de carcasse la plus radialement intérieure, à savoir qu'ils sont intercalés à l'aplomb du sommet avec les éléments de renforcement de la couche de carcasse. Ceci permet une rigidité maximale tout en ayant une épaisseur sommet minimale donc de maximiser la rigidité et donc le comportement tout en minimisant la masse et la résistance au roulement.

Pour le bon fonctionnement de l'invention, il est nécessaire que la couche de sommet la plus radialement extérieure soit ondulée. Il est préféré que d'autres couches de sommet soient ondulées selon des ondulations sensiblement de même amplitude radiale et de même position que la couche de sommet la plus radialement extérieure, afin de conserver l'épaisseur de l'empilement des couches ondulées constante sur la plus grande surface de ces couches de sommet. Cela permet d'obtenir une efficacité maximale des ondulations.

Préférentiellement toutes les couches de sommet sont ondulées, et leurs ondulations sont sensiblement identiques en position et en amplitude radiale sur leurs portions situées à l'aplomb de la partie centrale de la bande de roulement, à la variation de fabrication près.

Dans une architecture usuelle comprenant une couche de frettage, de préférence textile, deux couches de travail comprenant des éléments de renforcement métalliques, la couche de frettage étant la plus radialement extérieure des couches de sommet, il est nécessaire que cette couche de frettage soit ondulée. Les performances, résistance au roulement, adhérence ou comportement sont plus élevées encore si la couche de travail contiguë à la couche de frettage est ondulée avec des ondulations de même amplitude radiale et de mêmes positions au moins partiellement et au mieux sur la totalité de la surface de la couche de frettage. Ces mêmes performances sont plus élevées encore, si les deux couches de travail et la couche de frettage sont ondulées avec des ondulations de même amplitude radiale et de mêmes positions. L'invention fonctionne même si une partie de la couche de travail contigüe à la couche de frettage est ondulée et couplée sur ces ondulations à la couche de frettage et une autre partie découplée.

Une condition nécessaire pour le fonctionnement de l'invention est que les couches de sommet soient à une distance limitée de la surface de roulement notamment au niveau du point le plus radialement extérieur de l'ondulation. Selon le degré souhaité de protection de la couche de sommet la plus radialement extérieure, l'épaisseur de composé caoutchouteux entre la couche de sommet la plus radialement extérieure et le fond des rainures est au moins égale à 0.5 et au plus égale à 4 mm. Il ne s'agit pas d'augmenter cette épaisseur de composé caoutchouteux, mais bien de réduire la distance entre la surface de roulement à l'état neuf et le point le plus radialement extérieur de l'ondulation. De fait une condition suffisante est que la distance radiale (do) entre la surface radialement extérieure (SRE) de la couche de sommet la plus radialement extérieure et la surface de roulement au niveau de l'ondulation est inférieure d'au moins 1 mm à la distance radiale (dc) entre la surface radialement extérieure (SRE) de la couche de sommet la plus radialement extérieure et la surface de roulement, distance (dc) à l'aplomb du centre de la face de fond du sillon circonférentiel le plus proche du point considéré de la dite surface. Cette condition garantit une amplitude radiale de l'ondulation minimale de 1mm et que l'ondulation à l'aplomb des nervures ou des blocs ait bien pour objet de réduire la distance de la couche la plus radialement extérieure à la surface de roulement par rapport à un pneumatique sans ondulation.

L'amplitude radiale de chaque ondulation dans une couche de sommet est mesurée comme la distance radiale entre le point le plus radialement extérieur de la surface radialement extérieure (SRE) de ladite couche de sommet à l'aplomb du bloc ou de la nervure considérée et le point le plus radialement intérieur de la surface radialement extérieure (SRE) de ladite couche de sommet à l'aplomb du sillon circonférentiel le plus proche. Si il existe deux sillons circonférentiels équidistants du point le plus radialement extérieur de l'ondulation considérée, le point pris en compte pour le calcul de l'amplitude radiale sera celui donnant la valeur de l'amplitude radiale la plus élevée.

Les ondulations considérées sont des ondulations dites centrales, elles sont situées dans la partie centrale de la bande de roulement, centrée sur le plan équateur et d'une largeur de 0,8L, L étant la largeur de la surface de roulement à l'état neuf du pneumatique. La largeur L est mesurée, le pneumatique étant monté et gonflé à la pression nominale sur une jante nominale. N'est pas considéré comme une ondulation les zones de découplage entre les couches de sommet dans les parties les plus axialement extérieures du pneumatique ou épaule, en dehors de la partie centrale, dont l'objectif est uniquement de découpler les couches de sommet à leur extrémité pour éviter la fissuration des mélanges dans cette zone.

Il apparaît qu'une ondulation de 10% de la surface radialement extérieure de la couche de sommet la plus radialement extérieure à l'aplomb de la partie centrale de la bande de roulement, est suffisante pour mesurer un gain de performance en dynamique sous effort transversal. L'amplitude radiale de cette ondulation doit être au moins égale à 1 mm pour avoir des effets significatifs à l'échelle du pneumatique. Ainsi, dans l'invention, la différence entre la distance radiale (do) entre la surface radialement extérieure (SRE) de la couche de travail la plus radialement extérieure et la surface de roulement, est inférieure d'au moins 1 mm à la distance radiale (dc) entre la surface radialement extérieure (SRE) de la couche de travail la plus radialement extérieure et la surface de roulement, distance à l'aplomb du centre de la face de fond du sillon circonférentiel le plus proche de ladite ondulation, et ce sur une surface d'au moins 10% de ladite couche.

Préférentiellement pour la partie de l'armature de sommet à l'aplomb de la partie centrale de la bande de roulement, sur au moins 20%, préférentiellement au moins 30% et au plus 85%, de la surface radialement extérieure (SRE) de la couche de sommet la plus radialement extérieure, la distance radiale (do) entre la surface radialement extérieure (SRE) de la couche de sommet la plus radialement extérieure et la surface de roulement est inférieure d'au moins 1.5 mm, préférentiellement 2 mm, à la distance radiale (dc) entre la surface radialement extérieure (SRE) de la couche de sommet la plus radialement extérieure et la surface de roulement, distance mesurée à l'aplomb du point le plus radialement intérieur de la face de fond (243) du sillon circonférentiel le plus proche de ladite ondulation centrale du point considéré. Les paramètres de conception permettant le réglage de la dynamique sous effort transverse important, à savoir au moins de l'ordre de 50% de la charge nominale du pneumatique, sont:
- l'étendue des ondulations de la couche de travail la plus radialement extérieure, sachant que le taux d'entaillement de la sculpture, rarement inférieur à 15%, limite cette étendue à au plus 85% (85=%100%-15%). Plus l'ondulation ou les ondulations sont étendues, plus le pneumatique est rigide sous effort transversal, effet premier des ondulations.
- L'amplitude radiale de l'ondulation au moins égale à 1 mm mais limitée à 5 mm en raison des rayons de courbures à imposer aux couches de sommet.

Une solution préférée est donc que sur au moins 20%, préférentiellement au moins 30% et au plus 85%, de la surface radialement extérieure (SRE) de la couche de travail la plus radialement extérieure, la distance radiale (do) entre la surface radialement extérieure (SRE) de la couche de travail la plus radialement extérieure et la surface de roulement est inférieure d'au plus 5 mm, préférentiellement d'au plus 3 mm à la distance radiale (dc) entre la surface radialement extérieure (SRE) de la couche de travail la plus radialement extérieure et la surface de roulement, distance à l'aplomb du centre de la face de fond du sillon circonférentiel le plus proche de ladite ondulation.

Pour une performance optimale en perforation et agression du sommet sans pénaliser la résistance au roulement, la distance radiale (d1) entre la surface radialement extérieure (SRE) de la couche de travail la plus radialement extérieure et la face de fond des sillons circonférentiels, est au moins égale à 0.5 mm et au plus égale à 4 mm, préférentiellement au moins égale à 0.7 mm et au plus égale à 2 mm. En deçà des limites inférieures, le pneumatique pourrait être trop sensible aux agressions. Au-delà des limites supérieures, la résistance au roulement du pneumatique serait pénalisée.

Il est avantageux que la bande de roulement, par exemple un sillon circonférentiel de la bande de roulement, comprenne au moins un témoin d'usure, et que la distance radiale minimale (do) entre la surface radialement extérieure (SRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement la distance radiale minimale (do) entre la surface radialement extérieure (SRE) de la couche la plus radialement extérieure de l'armature de sommet et la surface de roulement est au plus égale à la profondeur D du sillon circonférentiel le plus proche augmentée de 2 mm et au moins égale à la profondeur D du sillon circonférentiel le plus proche diminuée de 2 mm, et préférentiellement sensiblement égale à la profondeur D du sillon circonférentiel le plus proche. Cette solution permet un positionnement idéal de la couche d'éléments de renforcement la plus radialement extérieure de l'armature de sommet et la surface de roulement. La distance radiale minimale (do) entre la surface radialement extérieure (SRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'un sillon circonférentiel (24) est au moins égale à 5 mm, et au plus égale à 10 mm. Les profondeurs de sculpture entre 6 et 10 mm permettent un bon compromis entre les performances en usure et en résistance au roulement dans de nombreux pneumatiques de tourisme.

Dans le cas où la couche d'éléments de renforcement la plus radialement extérieure est une couche de frettage, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une solution préférée est qu'au moins une gomme de bourrage ayant une épaisseur radiale au moins égale à 0.3 mm est positionnée à l'aplomb de chaque ondulation centrale de la couche de sommet la plus radialement extérieure de préférence radialement extérieure à la couche de carcasse, de préférence radialement intérieur à la couche de travail la plus radialement intérieure.. Ceci afin de permettre l'ondulation des nappes à la fabrication et à la cuisson. Ces gommes de bourrages peuvent être présentes sur la totalité de la circonférence du pneumatique ou disposées dans certaines portions du pneumatique selon les besoins. Il est possible de disposer plusieurs gommes de bourrage à l'aplomb de la ou des ondulations à différentes valeurs de rayons avec différentes propriétés en fonction du cahier des charges du pneumatiques. Si une seule gomme de bourrage est disposée, son épaisseur maximale est approximativement égale, pour une ondulation donnée, à l'amplitude radiale de la dite ondulation.

Il est avantageux que, la bande de roulement étant constituée par un mélange caoutchouteux, la gomme de bourrage, disposée à l'aplomb de la ou des ondulations, soit un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du ou des matériaux caoutchouteux constitutifs de la bande de roulement, mesurée à une température de 10°C et sous une contrainte de 0.7 MPa à 10 Hz. Pour un matériau de bourrage de même hystérèse, le gain en résistance au roulement est donné seulement par la diminution des sollicitations en cisaillement que ce matériau subit. Le matériau de bourrage ne subissant pas les mêmes contraintes que le matériau caoutchouteux constitutif de la bande de roulement, il est possible de modifier ses caractéristiques de manière à améliorer davantage la résistance au roulement. 30% de baisse d'hystérèse amène un gain significativement plus élevé pour l'invention.

Il est préféré que l'armature de sommet consiste en 2 nappes de travail ayant des angles opposés et une nappe de frettage, comme de nombreuses architectures de sommet actuelles.

Pour mesurer les différentes grandeurs géométriques, dont les amplitudes radiales d'ondulation et l'étendue de l'ondulation, il est usuel pour l'homme de l'art d'effectuer les mesures sur des coupes de pneu réalisées dans des plans méridiens, ou coupe méridienne. Pour obtenir davantage de précision, ces mesures peuvent être la moyenne de 4 mesures effectuées sur 4 plans méridiens disposés à 90°, les coupes de pneus sont polies pour faire apparaitre les interfaces des différents mélanges constituant le pneu. Le pneumatique étant torique, les mesures d'étendue de surface de l'ondulation revienne à des mesures de longueur sur une coupe méridienne. Par exemple on vérifiera sur une coupe méridienne que pour 10% de la longueur de la couche de sommet la plus radialement extérieure dans la partie centrale de la bande de roulement, la distance radiale entre la surface radialement extérieure de la couche de sommet la plus radialement extérieure et la surface de roulement au niveau de ou des ondulations, est inférieure d'au moins 1 mm à la distance radiale entre la surface radialement extérieure (SRE) de la couche de sommet la plus radialement extérieure et la surface de roulement, distance à l'aplomb de la face de fond du sillon circonférentiel le plus proche du point considéré de la dite surface.

Les caractéristiques et autres avantages de l'invention seront mieux compris à l'aide des figures 1 à 9, les dites figures n'étant pas représentées à l'échelle mais de façon simplifiée, afin de faciliter la compréhension de l'invention :
- la figure 1 représente une demi-coupe méridienne du sommet d'un pneumatique selon l'invention pourvue d'ondulations. Elle illustre l'amplitude radiale A d'une ondulation (51) de la couche de sommet la plus radialement extérieure 5, les différentes distances radiales, do, d1, D, df, de et un matériaux de bourrage, dit gomme de bourrage sommet (6) propre à créer une ondulation notamment de la couche de sommet la plus radialement extérieure.
- les figures 2 à 9 représentent des exemples non limitatifs des bourrelets et flanc selon l'invention

Une coupe méridienne du pneumatique est obtenue par découpage du pneumatique selon deux plans méridiens. Cette coupe sert à déterminer les différentes distances radiales et axiales mentionnées.

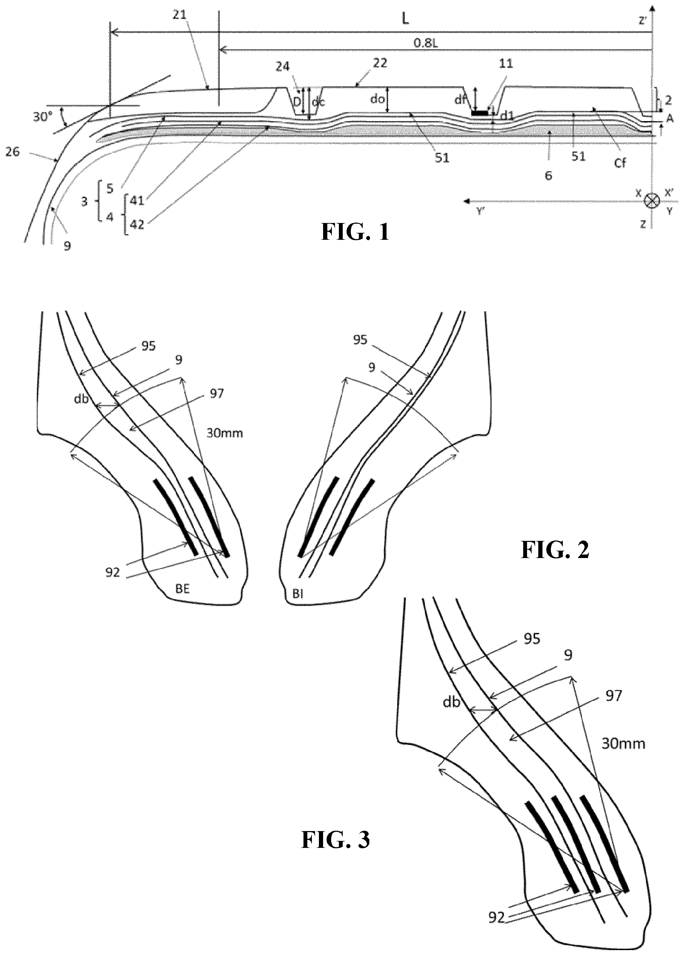

La figure 1 représente une portion d'un sommet de pneumatique. Sont représentés une couche de carcasse 9, radialement intérieure à l'armature de sommet 3 comprenant une armature de travail 4 contenant en l'occurrence deux couches de travail 41 et 42 composées d'éléments de renforcement au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50° et une couche de frettage 5. Le pneumatique comprend également une bande de roulement 2 délimitée par la surface de roulement 21 et les surfaces latérales extérieures 26 et comprenant des découpures dont en l'occurrence deux sillons circonférentiels 24 ayant des largeurs au moins égales à 6 mm. Un sillon circonférentiel peut être constitué par une succession de découpures ayant un angle avec la direction XX' non nul reliées les unes aux autres de manière à former une découpure continue sur toute la circonférence du pneumatique.

La figure 1 montre comment déterminer la largeur L de la bande de roulement. La largeur L de la bande de roulement est déterminée sur un pneumatique monté, sur une jante nominale et gonflé à la pression nominale. Dans le cas d'une frontière évidente entre la surface de roulement et le reste du pneumatique, la largeur de la bande de roulement est déterminée trivialement par l'homme du métier. Dans le cas où la surface de roulement 21 est continue avec la surface latérale extérieure 26 du pneumatique, la limite axiale de la surface de roulement passe par le point pour lequel l'angle entre la tangente à la surface de roulement 21 et une direction axiale YY' est égal à 30°. Lorsqu'il existe sur un plan méridien, plusieurs points pour lesquels le dit angle est égal à 30°, on retient le point radialement le plus à l'extérieur. La largeur de la bande de roulement est égale à la distance axiale entre les deux limites axiales de la surface de roulement de part et d'autre du plan équateur.

La figure 1 illustre en particulier des ondulations de toutes les couches de l'armature de sommet (3) dont les couches de travail (41, 42), et la couche de sommet (5) la plus radialement extérieure à l'aide d'un matériau bourrage (6) positionné entre la couche de carcasse (9) et la couche de travail la plus radialement intérieure (42). Ce matériau de bourrage entraine l'ondulation de l'ensemble des couche de sommet, 41, 42 , 5 et donc une ondulation 51 de la couche de frettage 5 la plus radialement extérieure des couches de sommet.

La figure 1 illustre également les distances radiales suivantes :
- D : la profondeur d'un sillon circonférentiel (24), distance radiale maximale entre la surface de roulement (21) et la face de fond du sillon, (hors puits de recreusage),
- de : distance radiale entre la surface radialement extérieure (SRE) de la couche de sommet (5) la plus radialement extérieure et la surface de roulement (21), distance à l'aplomb du point le plus radialement intérieur de la face de fond du sillon circonférentiel (24),
- do : la distance radiale entre la surface radialement extérieure (SRE) de la couche de sommet (5) la plus radialement extérieure et la surface de roulement (21) au niveau de l'ondulation (51),
- d1 : distance radiale minimale (d1) entre la surface radialement extérieure (SRE) de la couche de sommet (5) la plus radialement extérieure de l'armature de sommet (3) et la face de fond des sillons circonférentiels (24)
- df : la distance radiale entre la surface de roulement (21) et le point le plus radialement extérieur du témoin d'usure (11),
- A : amplitude radiale de l'ondulation mesurée pour une ondulation donnée entre le point le plus radialement extérieur de la dite ondulation et le point le plus radialement intérieur situé à l'aplomb du sillon circonférentiel 24 le plus proche.

La figure 2 représente les deux bourrelets et flancs d'un même pneumatique dont la dissymétrie est liée au sens de rotation du pneumatique. Le bourrelet BE est positionné côté extérieur véhicule et le bourrelet BI est positionné côté intérieur véhicule. Un marquage spécifique sur le flanc du pneumatique permet à l'utilisateur de positionner correctement le pneumatique. Le bourrelet extérieur doit être rigidifié car Il est susceptible d'être le plus sollicité dans les conditions les plus sollicitantes à savoir dans un virage à grande vitesse aux limites d'adhérence du pneumatique. Dans ces circonstances la surcharge et la déformation sont les plus importantes sur le pneumatique côté extérieur véhicule et sur le côté extérieur véhicule du pneumatique. Rigidifier les deux bourrelets peut avoir un intérêt en comportement mais a un coût en résistance au roulement. Dans la figure 2, les bourrelets BE et BI comprennent outre la couche de carcasse 9, un élément de renfort radial 95, possiblement une deuxième couche de carcasse, et une tringle 92, ici à section multilinéaire donc constituée d'au moins deux enroulements de fils métalliques élémentaires sensiblement parallèles à au moins une couche de carcasse. Seul le bourrelet extérieur est tel que l'élément de renfort radial 95 est à une distance axiale db au moins égale à 1 mm et au plus égale à 12 mm au point de l'élément de renfort radial situé à 30 mm du point le plus radialement intérieur de la tringle de manière à générer un effet de poutre rigidifiant ce bourrelet. Pour des pneumatiques dont les flancs n'indiqueraient pas de sens de montage privilégié, les deux bourrelets auraient la caractéristique susmentionnée présente dans le bourrelet extérieure (BE). La solution représentée montre un composé caoutchouteux, ou gomme de bourrage, dite gomme de bourrage bourrelet 97 positionné entre la couche de carcasse et l'élément de renfort radial.

Le bourrelet BI est un bourrelet standard optimisé s'il est associé à un sommet sans ondulation de ses couches de sommet. Il est notamment performant en résistance au roulement, car les cisaillements entre la couche de carcasse 9 et l'élément de renfort carcasse 95 sont sensiblement nuls en flexion.

Les figures 3 à 9 illustrent des variantes des bourrelets selon l'invention sans exhaustivité.

La figure 3 représente un bourrelet avec une tringle multilinéaire à trois enroulements de fils métalliques élémentaires sensiblement parallèles à au moins une couche de carcasse, la couche de carcasse 9, l'élément de renfort radial 95 qui est ici possiblement une seconde couche de carcasse.

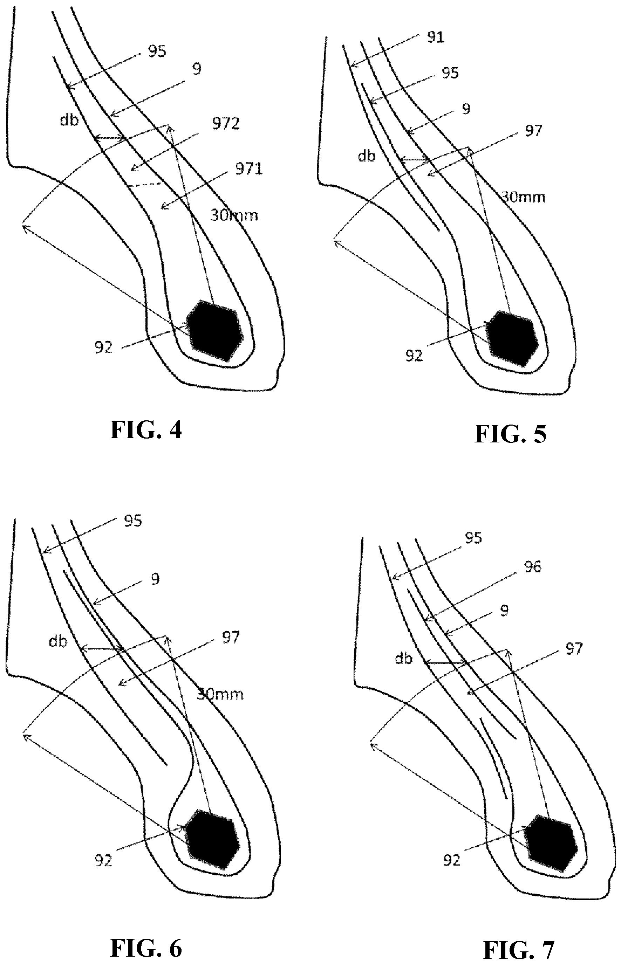

La figure 4 illustre un bourrelet où la tringle est une tringle à section polygonale et l'élément de renfort radial 95 est constitué par le brin de retour de la couche de carcasse. La gomme de bourrage bourrelet est constituée de deux gommes de bourrage 971 et 972. Le premier composé caoutchouteux 971 est radialement intérieur au second composé caoutchouteux 972 et le premier composé caoutchouteux 971 présente un module d'extension sécant MA10 à 10 % de déformation, mesuré à 23° C selon la norme ASTM D 412, au moins égal au module d'extension sécant MA10 à 10 % de déformation, mesuré à 23° C selon la norme ASTM D 412, du second composé caoutchouteux 972. Ces deux caractéristiques ne sont associées que pour l'illustration. Par exemple, la caractéristique de deux composés caoutchouteux différents peut être associée aux tringles multilinéaires.

La figure 5 illustre un bourrelet où la tringle est une tringle à section polygonale et l'élément de renfort radial 95 est constitué par le brin de retour de la couche de carcasse avec une seconde couche de carcasse 91.

La figure 6 est une variante de la figure 5, dans laquelle le brin de retour carcasse est plaqué à la couche de carcasse 9. Dans cette configuration, la seconde couche de carcasse 95, étant également un élément de renfort carcasse, la caractéristique essentielle de l'invention est présente.

La figure 7 est une variante ou le brin de retour carcasse étant trop court, c'est la seconde couche de carcasse qui est l'élément de renfort carcasse servant à rigidifier le bourrelet en créant un effet poutre. Le bourrelet selon la figure 7 comprend également une couche de renfort bourrelet 96. Cette couche de renfort bourrelet comprend des éléments de renforcements, formant avec la direction radiale un angle en valeur absolue compris entre 10° et 60°. Ces éléments de renforcement sont situés entre la couche de carcasse et l'élément de renfort radial notamment au point de l'élément de renfort radial situé à 30 mm du point le plus radialement intérieur de la tringle.

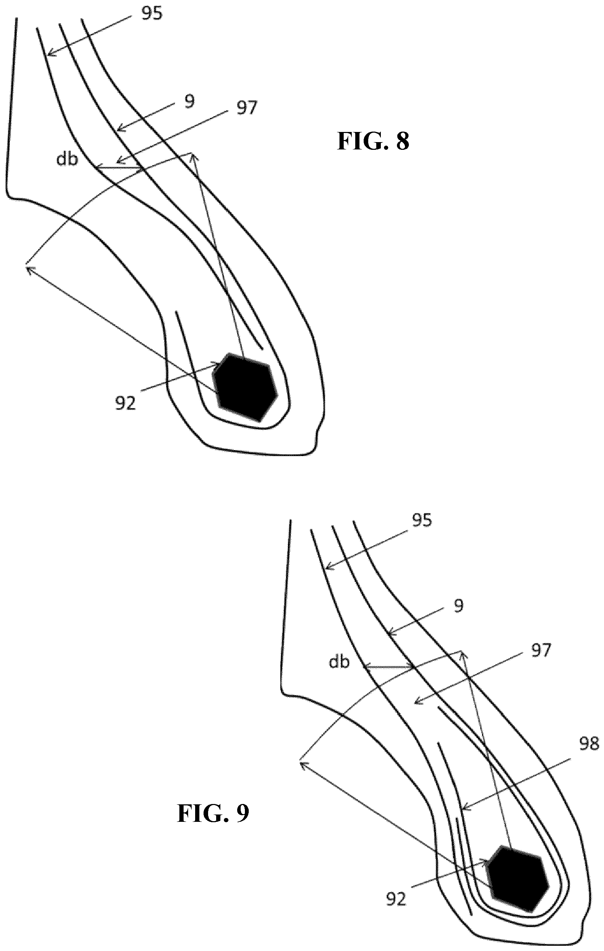

La figure 8 est une variante de la figure 7 où la seconde couche de carcasse est l'élément de renfort radial 95 et elle est plaqué à la couche de carcasse la plus radialement intérieure 9 sur sa partie intérieure mais valide la caractéristique de l'invention sur la zone de flexion où la rigidité est nécessaire.

La figure 9 est une autre variante illustrant de manière non-exhaustive la possibilité que le bourrelet comporte d'autres types de renforts, ici à titre d'exemple un renfort textile 98 plaqué à la couche de carcasse 9 dans la partie basse du bourrelet au niveau de la tringle afin d'améliorer la performance du pneumatique au déroulement de la couche de carcasse en cas de température excessive des freins.

Des tests ont été menés pour comparer différentes solutions :
- Des pneumatiques de type A dont les bourrelets comprennent chacun deux tringles multilinéaires enserrant dans le bourrelet une unique couche de carcasse. Les couches de sommet de ces pneumatiques ne sont pas ondulées. Ils sont notés comme sommet plat, bourrelet souple dans le tableau 1.
- Des pneumatiques de type B dont les bourrelets comprennent trois tringles multilinéaires enserrant dans le bourrelet deux couches de carcasse telles qu'illustrées dans la figure 3. Ces bourrelets sont rigidifiés en comparaison avec les bourrelets des pneumatiques de type A, par l'insertion d'une gomme de bourrage bourrelet 97 positionnée entre la couche de carcasse et l'élément de renfort radial, d'une épaisseur axiale égale à 5 mm. Elle est constituée par un composé caoutchouteux présentant un module d'extension sécant MA10 à 10 % de déformation, mesuré à 23° C selon la norme ASTM D 412, égal à 7MPa. Les couches de sommet de ces pneumatiques ne sont pas ondulées. Ils sont notés comme sommet plat, bourrelet rigide dans le tableau 1.
- Des pneumatiques de type C dont les bourrelets sont identiques aux bourrelets des pneumatiques de type A, souples, et dont les couches de sommet sont ondulées. Ils sont notés comme sommet ondulé, bourrelet souple dans le tableau 1.
- Des pneumatiques de type D selon l'invention dont les bourrelets sont identiques aux bourrelets rigides des pneumatiques de type B, et dont les couches de sommet sont ondulées. Ils sont notés comme sommet ondulé, bourrelet rigide dans le tableau 1.

Les pneumatiques de type A, B, C, D sont disponibles en 1 dimension 305/30R20 destinée à équiper le train arrière d'un véhicule de tourisme à propulsion. Les pneumatiques du train avant du véhicule sont identiques dans les tests de comportement. Ils ne sont pas une variable de l'expérience.

Les différents composants des pneumatiques A, B, C, D sont identiques en termes de nature et de propriétés. L'architecture, les propriétés des éléments de renforcement des différentes couches de renforts, leur densité sont identiques. Les composés caoutchouteux des différentes parties des pneumatiques sont également identiques à l'exception de la gomme de bourrage bourrelet (97) présente uniquement sur les pneumatiques B et D et les gommes de bourrage sommet (6) propres à créer des ondulations des couches de sommet présentes uniquement sur les pneumatiques C et D.

Les sculptures des pneumatiques A, B, C, D sont identiques. Les profondeurs D des rainures de la sculpture sont comprises entre 5 mm aux épaules et 7 mm à l'équateur, pour des largeurs W variant entre 4 et 15 mm, la bande de roulement contient 4 sillons circonférentiels. L'armature sommet est composée de deux couches de travail dont les éléments de renforcement font un angle de + ou - 38° avec la direction circonférentielle et d'une couche de frettage textile dont les éléments de renforcement font un angle proche de 0° avec la direction circonférentielle.

Pour les pneumatiques de type C et D, la couche de sommet la plus radialement extérieure, la couche de frettage 5, est ondulée sous les 5 nervures de la bande de roulement, constituant 50% de sa surface. Les ondulations sont réalisées à l'aide de gommes de bourrage sommet (6) radialement intérieurs à la couche de travail la plus radialement intérieure, situées plus précisément entre la couche de carcasse et la couche de sommet la plus radialement intérieure. Les ondulations ont des amplitudes radiales de 2mm, c'est-à-dire les distances radiales (du) entre la surface radialement extérieure (SRE) de la couche de sommet (5) la plus radialement extérieure et la surface de roulement au niveau des ondulations (51) sont inférieures de 2 mm aux distances radiales (dc) entre la surface radialement extérieure (SRE) de la couche de sommet (5) la plus radialement extérieure et la surface de roulement (21), distances à l'aplomb du point le plus radialement intérieur de la face de fond des sillons circonférentiels (24) les plus proches des dites ondulations (51). La distance radiale (d1) entre la surface radialement extérieure (SRE) de la couche de sommet la plus radialement extérieure (5) et la face de fond des sillons circonférentiels (24), est égale à 1,5 mm.

Les pneumatiques sont testés en résistance au roulement et pour évaluer le comportement, en temps de réponse et en amortissement subjectif.

Le gain en résistance au roulement de l'invention a été évalué sur une machine standard pour des mesures normalisées ISO 2850 :2009.

Le temps de réponse est testé sur véhicule (Ferrari 488 GTB) par un pilote professionnel formé à ce test, sur une ligne droite de circuit automobile à la vitesse de 140 km/h. Le pilote met un angle déterminé au volant en un temps donné très court et évalue le déphasage temporel entre la consigne au volant et l'accélération latérale du véhicule ainsi générée. Plus le temps de déphasage est court, meilleure est la performance. La mesure peut également être réalisée avec des accéléromètres.

Les mêmes mesures permettent d'évaluer l'amortissement évalué subjectivement par le pilote qui évalue l'amplitude de la première oscillation, le nombre d'oscillations, le temps nécessaire à la fin de la perception des oscillations autour de la trajectoire due au coup de volant par le pilote. Un amortissement performant est lié à une première oscillation de faible amplitude, un nombre d'oscillations ressenties faibles et un temps nécessaire à la fin de la perception des oscillations court. Ces critères sont pondérés sur une grille de notation fonction du véhicule et des caractéristiques associées que souhaitent donner le constructeur dudit véhicule.

**Tableau 1**

| Pneumatiques | Sommet | Bourrelet | Temps de réponse | Amortissement subjectif | Résistance au roulement |
|---|---|---|---|---|---|
| A | plat | souple | 100 | 100 | 100 |
| B | plat | rigide | 102 | 109 | 94 |
| C | ondulé | souple | 108 | 92 | 110 |
| D invention | ondulé | rigide | 110 | 101 | 104 |

Le tableau 1 donne les performances des pneumatiques selon les différents tests. Toute performance supérieure à 100, est supérieure à la performance du pneumatique témoin A considéré comme référence chez le constructeur.

En rigidifiant seulement le bourrelet et en conservant un sommet plat, le pneumatique B est sensiblement équivalent au témoin sur le temps de réponse essentiellement lié au fonctionnement du sommet. Il est meilleur de 9% en amortissement en raison de la rigidité du bourrelet. Cependant l'augmentation de l'épaisseur du bourrelet amène une perte de 6% en résistance au roulement.

En ondulant seulement les couches de sommet et en conservant un bourrelet souple, le pneumatique C est meilleur de 8% comparativement au témoin A sur le temps de réponse. Le pneumatique C est dégradé en amortissement de 8% car l'interaction entre le sommet ondulé et le bourrelet amène une dégradation de la performance. Le sommet ondulé amène un gain en résistance au roulement de 10%.

En ondulant les couches de sommet et en lui associant un bourrelet rigide, le pneumatique D selon l'invention est meilleur de 10% comparativement au témoin A sur le temps de réponse. Le pneumatique D est sensiblement équivalent en amortissement subjectif au témoin grâce à l'interaction entre le sommet ondulé et le bourrelet rigide. Le sommet ondulé amène un gain de 4% en résistance au roulement malgré l'épaisseur augmentée du bourrelet par rapport au témoin A.

Ainsi seul le pneumatique D selon l'invention permet d'augmenter les performances sans compromis par rapport au pneumatique A témoin.

## Revendications

1. Pneumatique (1) de tourisme comprenant :
- une bande de roulement (2) destinée à entrer en contact avec un sol par l'intermédiaire d'une surface de roulement (21) d'une largeur axiale L et comprenant une partie centrale (22) de la bande de roulement d'une largeur égale à 0,8*L, cette partie centrale (22) de la bande de roulement (2) comprenant au moins deux sillons circonférentiels (24),
- une armature de sommet (3), radialement intérieure à la bande de roulement (2), comprenant au moins une couche de sommet (5, 41, 42), la ou les couches de sommet étant des couches d'éléments de renforcement, l'armature de sommet (3) comprenant une armature de travail (4), comprenant au moins une couche de travail (41, 42), chaque couche de travail (41,42) comprenant des éléments de renforcement, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
chaque couche de sommet (5, 41, 42) s'étendant radialement depuis une surface radialement intérieure (SRI) jusqu'à une surface radialement extérieure (SRE),
la couche de sommet (5) la plus radialement extérieure à l'aplomb de la partie centrale (22) de la bande de roulement (2) comprenant au moins une ondulation dite ondulation centrale (51) d'amplitude radiale A, au moins égale à 1mm, l'amplitude radiale A étant mesurée dans un plan méridien,
une ondulation centrale (51) de la couche de sommet (5) la plus radialement extérieure est telle que la portion de la surface radialement extérieure (SRE) de la couche de sommet (5) de ladite ondulation centrale (51) est radialement extérieure aux points de la couche de sommet (5) la plus radialement extérieure à l'aplomb de la face de fond du sillon circonférentiel (24) le plus proche de ladite ondulation (51),
- deux bourrelets (BE, BI) destinés à venir en contact avec une jante et deux flancs reliant le sommet aux bourrelets (BE, BI), chaque bourrelet (BE, BI) comprenant au moins une tringle (92) comprenant des éléments circonférentiels de renforcement métallique,
- une couche de carcasse (9), radialement intérieure au sommet et reliant les deux bourrelets (BE, BI), la couche de carcasse comprenant des éléments de renforcement, textile enrobés par un matériau élastomérique, parallèles entre eux et formant avec la direction radiale (ZZ") du pneumatique, un angle dont la valeur absolue est au plus égale à 15°,
au moins un bourrelet (BE, BI) comprend un élément de renfort radial (95) comprenant des éléments de renforcement textile enrobés par un matériau élastomérique, parallèles entre eux et formant avec la direction radiale (ZZ") du pneumatique, un angle dont la valeur absolue est au plus égale à 15°, dans ledit bourrelet (BE, BI), le point le plus radialement intérieur de l'élément de renfort radial étant à une distance radiale au plus égale à 20 mm du point le plus radialement intérieur de la tringle, **caractérisé en ce que**
dans ledit bourrelet (BE, BI), un point de l'élément de renfort radial (95) est radialement extérieur et à une distance radiale au moins égale 40 mm du point le plus radialement intérieur de la tringle (92) et **en ce que** la distance axiale db entre l'élément de renfort radial (95) et la couche de carcasse (9) la plus axialement intérieure est au moins égale à 1 mm et au plus égale à 12 mm au point de l'élément de renfort radial (95) situé à 30 mm du point le plus radialement intérieur de la tringle (92), ladite distance axiale db étant mesurée sur une coupe méridienne depuis le point le plus axialement extérieur de la couche de carcasse la plus axialement intérieure jusqu'au point le plus axialement intérieur dudit élément de renfort radial.

2. Pneumatique selon la revendication 1, dont l'un des bourrelets (BE) est destiné à être positionné du côté extérieur d'un véhicule sur lequel la jante de montage est fixée, dans lequel le bourrelet (BE) destiné à être positionné du côté extérieur d'un véhicule sur lequel la jante de montage est fixée comprend un élément de renfort radial (95) et la distance axiale entre l'élément de renfort radial (95) et la couche de carcasse (9) est au moins égale à 1 mm, de préférence au moins égale à 3 mm et au plus égale à 12 mm au point de l'élément de renfort radial (95) situé à 30 mm du point le plus radialement intérieur de la tringle (92).

3. Pneumatique selon l'une ou l'autre des revendications 1 ou 2, comprenant une gomme de bourrage dite gomme de bourrage bourrelet (97) positionné entre la couche de carcasse (9) et l'élément de renfort radial (95) et dans lequel la gomme de bourrage bourrelet (97), est d'une épaisseur axiale au moins égale à 1 mm, de préférence au moins égale à 4 mm et au plus égale à 8 mm, au point de l'élément de renfort radial (95) situé à 30 mm du point le plus radialement intérieur de la tringle (92), et comprend au moins un composé caoutchouteux présentant un module d'extension sécant MA10 à 10 % de déformation, mesuré à 23° C selon la norme ASTM D 412, au moins égal à 5 MPa, de préférence au moins égal à 10 MPa.

4. Pneumatique selon la revendication précédente, dans lequel la gomme de bourrage bourrelet (97) est constituée de deux composés caoutchouteux, le premier composé caoutchouteux étant radialement intérieur au second composé caoutchouteux et le premier composé caoutchouteux présentant un module d'extension sécant MA10 à 10 % de déformation, mesuré à 23° C selon la norme ASTM D 412, au moins égal au module d'extension sécant MA10 à 10 % de déformation, mesuré à 23° C selon la norme ASTM D 412, du second composé caoutchouteux.

5. Pneumatique selon l'une quelconque des revendications précédentes, dans lequel au moins une couche de renfort bourrelet (96) comprenant des éléments de renforcements, formant avec la direction radiale un angle en valeur absolue compris entre 10° et 60°, est située entre la couche de carcasse (9) et l'élément de renfort radial (95), de préférence au point de l'élément de renfort radial (95) situé à 30 mm du point le plus radialement intérieur de la tringle (92).

6. Pneumatique selon l'une quelconque des revendications 3 à 5, dans lequel le point le plus radialement extérieur de la gomme de bourrage bourrelet (97) est à une distance au moins égale à 30 mm du point le plus radialement intérieur de la tringle (92), de préférence au moins égale à 45 mm.

7. Pneumatique selon l'une quelconque des revendications précédentes, dans lequel l'élément de renfort radial (95) est constitué par le brin retour de la couche de carcasse (9) la plus axialement intérieure.

8. Pneumatique selon l'une quelconque des revendications précédentes, dans lequel les points les plus axialement intérieurs de l'élément de renfort radial (95) sont axialement intérieurs aux points les plus axialement extérieurs des couches de sommet (41, 42, 5) et sur le même rayon que les éléments de renforcement de la couche de carcasse (9) la plus radialement intérieure.

9. Pneumatique selon l'une quelconque des revendications précédentes, dans lequel deux couches de carcasse relient les deux bourrelets.

10. Pneumatique selon la revendication précédente, dans lequel les deux couches de carcasse sont situées sur les mêmes rayons pour tous les points axialement intérieurs au point le plus axialement extérieur des couches de sommet et radialement extérieurs au point le plus axialement extérieur du pneumatique.

11. Pneumatique selon l'une quelconque des revendications précédentes, dans lequel la ou les ondulations centrales (51) de la couche d'éléments de renforcement (5) la plus radialement extérieure sont telles que, sur au moins 10% de la surface radialement extérieure (SRE) de ladite couche de sommet (5) à l'aplomb de la partie centrale de la bande de roulement, la distance radiale (do) entre la surface radialement extérieure (SRE) de la couche de sommet (5) la plus radialement extérieure et la surface de roulement (21) au niveau de ladite ondulation, est inférieure d'au moins 1 mm à la distance radiale (dc) entre la surface radialement extérieure (SRE) de la couche de sommet (5) la plus radialement extérieure et la surface de roulement (21), distance à l'aplomb de la face de fond du sillon circonférentiel (24) le plus proche du point considéré de la dite surface.

12. Pneumatique selon l'une quelconque des revendications précédentes, dans lequel la partie de la couche de carcasse à l'aplomb de la partie centrale de la bande de roulement est radialement extérieure à tous les points de la couche de carcasse à l'aplomb des extrémités des couches de sommet.

13. Pneumatique selon l'une quelconque des revendications précédentes, dans lequel la distance radiale minimale (do) entre la surface radialement extérieure (SRE) de la couche la plus radialement extérieure de l'armature de sommet et la surface de roulement est au plus égale à la profondeur D du sillon circonférentiel le plus proche augmentée de 2 mm et au moins égale à la profondeur D du sillon circonférentiel le plus proche diminuée de 2 mm, et préférentiellement sensiblement égale à la profondeur D du sillon circonférentiel le plus proche.

## Patentansprüche

1. Reifen (1) für einen Personenkraftwagen, umfassend:
- einen Laufstreifen (2), der dazu bestimmt ist, über eine Lauffläche (21) mit einer axialen Breite L mit einem Boden in Kontakt zu gelangen, und einen zentralen Teil (22) des Laufstreifens mit einer Breite gleich 0,8*L umfasst, wobei dieser zentrale Teil (22) des Laufstreifens (2) mindestens zwei Umfangsrillen (24) umfasst,
- eine Scheitelbewehrung (3), radial innerhalb des Laufstreifens (2), umfassend mindestens eine Scheitellage (5, 41, 42), wobei die Scheitellage oder Scheitellagen Lagen aus Verstärkungselementen sind, wobei die Scheitelbewehrung (3) eine Arbeitsbewehrung (4) umfasst, die mindestens eine Arbeitslage (41, 42) umfasst, wobei jede Arbeitslage (41,42) mindestens teilweise metallische Verstärkungselemente umfasst, die mit einem Elastomermaterial umhüllt sind, untereinander parallel sind und mit der Umfangsrichtung (XX') des Reifens einen ausgerichteten Winkel bilden, dessen absoluter Wert mindestens 15° und höchstens 50° beträgt, wobei sich jede Scheitellage (5, 41, 42) radial von einer radial inneren Fläche (SRI) aus bis zu einer radial äußeren Fläche (SRE) erstreckt,
wobei die radial äußerste Scheitellage (5) in der Lotrechten zum zentralen Teil (22) des Laufstreifens (2) mindestens eine Wölbung, zentrale Wölbung (51) genannt, mit einer radialen Amplitude A von mindestens 1 mm umfasst, wobei die radiale Amplitude A in einer Meridianebene gemessen wird,
wobei eine zentrale Wölbung (51) der radial äußersten Scheitellage (5) derart ist, dass der Abschnitt der radial äußeren Fläche (SRE) der Scheitellage (5) der zentralen Wölbung (51) radial außerhalb der Punkte der radial äußersten Scheitellage (5) in der Lotrechten zur Bodenfläche der zur Wölbung (51) nächstgelegenen Umfangsrille (24) ist,
- zwei Wülste (BE, BI), die dazu bestimmt sind, mit einer Felge in Kontakt zu gelangen, und zwei Flanken, die den Scheitel mit den Wülsten (BE, BI) verbinden, wobei jeder Wulst (BE, BI) mindestens einen Wulstkern (92) umfasst, der metallische Umfangsverstärkungselemente umfasst,
- eine Karkassenlage (9), radial innerhalb des Scheitels und die beiden Wülste (BE, BI) verbindend, wobei die Karkassenlage textile Verstärkungselemente umfasst, die mit einem Elastomermaterial umhüllt sind, untereinander parallel sind und mit der radialen Richtung (ZZ") des Reifens einen Winkel bilden, dessen absoluter Wert höchstens 15° beträgt,
wobei mindestens ein Wulst (BE, BI) ein radiales Aussteifungselement (95) umfasst, das textile Verstärkungselemente umfasst, die mit einem Elastomermaterial umhüllt sind, untereinander parallel sind und mit der radialen Richtung (ZZ") des Reifens einen Winkel bilden, dessen absoluter Wert höchstens 15° beträgt, wobei in dem Wulst (BE, BI) der radial innerste Punkt des radialen Aussteifungselements in einem radialen Abstand von höchstens 20 mm von dem radial innersten Punkt des Wulstkerns liegt, **dadurch gekennzeichnet, dass** in dem Wulst (BE, BI) ein Punkt des radialen Aussteifungselements (95) radial außerhalb und in einem radialen Abstand von mindestens 40 mm von dem radial innersten Punkt des Wulstkerns (92) liegt, und
dadurch, dass der axiale Abstand db zwischen dem radialen Aussteifungselement (95) und der axial innersten Karkassenlage (9) mindestens 1 mm und höchstens 12 mm an dem Punkt des radialen Aussteifungselements (95) beträgt, der 30 mm von dem radial innersten Punkt des Wulstkerns (92) entfernt liegt, wobei der axiale Abstand db an einem Meridianschnitt von dem axial äußersten Punkt der axial innersten Karkassenlage aus bis zu dem axial innersten Punkt des radialen Aussteifungselements gemessen wird.

2. Reifen nach Anspruch 1, bei dem einer der Wülste (BE) dazu bestimmt ist, auf der Außenseite eines Fahrzeugs positioniert zu werden, an dem die Montagefelge befestigt ist, wobei der Wulst (BE), der dazu bestimmt ist, auf der Außenseite eines Fahrzeugs positioniert zu werden, an dem die Montagefelge befestigt ist, ein radiales Aussteifungselement (95) umfasst und der axiale Abstand zwischen dem radialen Aussteifungselement (95) und der Karkassenlage (9) mindestens 1 mm, bevorzugt mindestens 3 mm und höchstens 12 mm an dem Punkt des radialen Aussteifungselements (95) beträgt, der 30 mm von dem radial innersten Punkt des Wulstkerns (92) entfernt liegt.

3. Reifen nach dem einen oder anderen der Ansprüche 1 oder 2, umfassend ein Füllgummi, Wulstfüllgummi (97) genannt, das zwischen der Karkassenlage (9) und dem radialen Aussteifungselement (95) positioniert ist, und bei dem das Wulstfüllgummi (97) eine axiale Dicke von mindesten 1 mm, bevorzugt mindestens 4 mm und höchstens 8 mm an dem Punkt des radialen Aussteifungselements (95) hat, der 30 mm von dem radial innersten Punkt des Wulstkerns (92) entfernt liegt, und mindestens eine Kautschukzusammensetzung umfasst, die einen Sekantendehnungsmodul MA10 bei 10 % Verformung, gemessen bei 23 °C nach der Norm ASTM D 412, von mindestens 5 MPa, bevorzugt von mindestens 10 MPa aufweist.

4. Reifen nach dem vorhergehenden Anspruch, bei dem das Wulstfüllgummi (97) aus zwei Kautschukzusammensetzungen besteht, wobei die erste Kautschukzusammensetzung radial innerhalb der zweiten Kautschukzusammensetzung ist und wobei die erste Kautschukzusammensetzung einen Sekantendehnungsmodul MA10 bei 10 % Verformung, gemessen bei 23 °C nach der Norm ASTM D 412, aufweist, der mindestens gleich dem Sekantendehnungsmodul MA10 bei 10 % Verformung, gemessen bei 23 °C nach der Norm ASTM D 412, der zweiten Kautschukzusammensetzung ist.

5. Reifen nach einem der vorhergehenden Ansprüche, bei dem mindestens eine Wulstaussteifungslage (96), die Verstärkungselemente umfasst und mit der radialen Richtung einen Winkel mit einem absoluten Wert zwischen 10° und 60° bildet, zwischen der Karkassenlage (9) und dem radialen Aussteifungselement (95) liegt, bevorzugt an dem Punkt des radialen Aussteifungselements (95), der 30 mm von dem radial innersten Punkt des Wulstkerns (92) entfernt liegt.

6. Reifen nach einem der Ansprüche 3 bis 5, bei dem der radial äußerste Punkt des Wulstfüllgummis (97) in einem Abstand von mindestens 30 mm von dem radial innersten Punkt des Wulstkern (92), bevorzugt von mindestens 45 mm, liegt.

7. Reifen nach einem der vorhergehenden Ansprüche, bei dem das radiale Aussteifungselement (95) aus dem Rückstrang der axial innersten Karkassenlage (9) besteht.

8. Reifen nach einem der vorhergehenden Ansprüche, bei dem die axial innersten Punkte des radialen Aussteifungselements (95) axial innerhalb der axial äußersten Punkte der Scheitellagen (41, 42, 5) sind und auf dem gleichen Radius liegen wie die Verstärkungselemente der radial innersten Karkassenlage (9) .

9. Reifen nach einem der vorhergehenden Ansprüche, bei dem zwei Karkassenlagen die beiden Wülste verbinden.

10. Reifen nach dem vorhergehenden Anspruch, bei dem die beiden Karkassenlagen für alle Punkte axial innerhalb des axial äußersten Punktes der Scheitellagen und radial außerhalb des axial äußersten Punktes des Reifens auf den gleichen Radien liegen.

11. Reifen nach einem der vorhergehenden Ansprüche, bei dem die zentrale(n) Wölbung(en) (51) der radial äußersten Lage aus Verstärkungselementen (5) derart sind, dass auf mindestens 10 % der radial äußeren Fläche (SRE) der Scheitellage (5) in der Lotrechten zum zentralen Teil des Laufstreifens der radiale Abstand (do) zwischen der radial äußeren Fläche (SRE) der radial äußersten Scheitellage (5) und der Lauffläche (21) an der Wölbung um mindestens 1 mm kleiner ist als der radiale Abstand (dc) zwischen der radial äußeren Fläche (SRE) der radial äußersten Scheitellage (5) und der Lauffläche (21), wobei es sich um den Abstand in der Lotrechten zur Bodenseite der zu dem betrachteten Punkt der Fläche nächstgelegenen Umfangsrille (24) handelt.

12. Reifen nach einem der vorhergehenden Ansprüche, bei dem der Teil der Karkassenlage in der Lotrechten zu dem zentralen Teil des Laufstreifens radial außerhalb aller Punkte der Karkassenlage in der Lotrechten zu den Enden der Scheitellagen liegt.

13. Reifen nach einem der vorhergehenden Ansprüche, bei dem der minimale radiale Abstand (do) zwischen der radial äußeren Fläche (SRE) der radial äußersten Lage der Scheitelbewehrung und der Lauffläche höchstens gleich der Tiefe D der nächstgelegenen Umfangsrille zuzüglich von 2 mm ist und mindestens gleich der Tiefe D der nächstgelegenen Umfangsrille abzüglich von 2 mm ist und bevorzugt im Wesentlichen gleich der Tiefe D der nächstgelegenen Umfangsrille ist.

## Claims

1. Tyre (1) for a passenger vehicle comprising:
- a tread (2) intended to come into contact with the ground via a tread surface (21), having an axial width L and comprising a tread central part (22) having a width equal to 0.8*L, this central part (22) of the tread (2) comprising at least two circumferential grooves (24),
- a crown reinforcement (3), radially on the inside of the tread (2), comprising at least one crown layer (5, 41, 42), the crown layer or layers being layers of reinforcing elements, the crown reinforcement (3) comprising a working reinforcement (4) comprising at least one working layer (41, 42), each working layer (41, 42) comprising reinforcing elements which are at least partially metallic, coated with an elastomeric material, parallel to one another and which make, with the circumferential direction (XX') of the tyre, an oriented angle of which the absolute value is at least equal to 15° and at most equal to 50°,
each crown layer (5, 41, 42) extending radially from a radially inner surface (RIS) to a radially outer surface (ROS),
the radially outermost crown layer (5) vertically beneath the central part (22) of the tread (2) comprising at least one undulation referred to as central undulation (51), with a radial amplitude A at least equal to 1 mm, said radial amplitude being measured in a meridian plane, a central undulation (51) of the radially outermost crown layer (5) being such that the portion of the radially outer surface (ROS) of the crown layer (5) of said central undulation (51) is radially on the outside of those points of the radially outermost crown layer (5) vertically beneath the face of the bottom of the circumferential groove (24) closest to said undulation (51),
- two beads (BE, BI) intended to come into contact with a rim and two sidewalls connecting the crown to the beads (BE, BI), each bead (BE, BI) comprising at least one bead wire (92) comprising circumferential metal reinforcing elements,
- a carcass layer (9), radially on the inside of the crown and connecting the two beads (BE, BI), the carcass layer comprising textile reinforcing elements coated in an elastomeric material, which are parallel to one another and make, with the radial direction (ZZ") of the tyre, an angle of which the absolute value is at most equal to 15°,
at least one bead (BE, BI) comprises a radial reinforcing element (95) comprising textile reinforcing elements coated in an elastomeric material, which are parallel to one another and make, with the radial direction (ZZ") of the tyre, an angle of which the absolute value is at most equal to 15°, in said bead (BE, BI) the radially innermost point of the radial reinforcing element being at a radial distance at most equal to 20 mm from the radially innermost point of the bead wire,
**characterized in that** in said bead (BE, BI), a point of the radial reinforcing element (95) is radially on the outside of, and at a radial distance at least equal to 40 mm from the radially innermost point of the bead wire (92) and **in that** the axial distance between the radial reinforcing element (95) and the axially innermost carcass layer (9) is at least equal to 1 mm and at most equal to 12 mm at the point of the radial reinforcing element (95) that is situated 30 mm from the radially innermost point of the bead wire (92), said axial distance db being measured in a meridian section from the axially outermost point of the axially innermost carcass layer to the axially innermost point of said radial reinforcing element.

2. Tyre according to Claim 1, of which one (BE) of the beads is intended to be positioned on the exterior side of a vehicle to which the mounting rim is attached, wherein the bead (BE) intended to be positioned on the exterior side of a vehicle on which the mounting rim is attached comprises a radial reinforcing element (95) and the axial distance between the radial reinforcing element (95) and the carcass layer (9) is at least equal to 1 mm, preferably at least equal to 3 mm, and at most equal to 12 mm at the point of the radial reinforcing element (95) that is situated 30 mm from the radially innermost point of the bead wire (92).

3. Tyre according to one or other of Claims 1 and 2, comprising a filler rubber referred to as bead filler (97) positioned between the carcass layer (9) and the radial reinforcing element (95) and wherein the bead filler (97) has an axial thickness at least equal to 1 mm, preferably at least equal to 4 mm and at most equal to 8 mm, at the point of the radial reinforcing element (95) that is situated 30 mm from the radially innermost point of the bead wire (92), and comprises at least one rubber compound having a secant extension modulus MA10 at 10% strain, measured at 23°C in accordance with standard ASTM D 412 at least equal to 5 MPa, and preferably at least equal to 10 MPa.

4. Tyre according to the preceding claim, wherein the bead filler (97) is made up of two rubber compounds, the first rubber compound being radially on the inside of the second rubber compound, and the first rubber compound having a secant extension modulus MA10 at 10% strain, measured at 23°C in accordance with standard ASTM D 412 at least equal to the secant extension modulus MA10 at 10% strain, measured at 23°C in accordance with standard ASTM D 412, of the second rubber compound.

5. Tyre according to any one of the preceding claims, wherein at least one bead reinforcement layer (96), comprising reinforcing elements, making with the radial direction, an angle comprised, in terms of absolute value, between 10° and 60°, is situated between the carcass layer (9) and the radial reinforcing element (95), preferably at the point on the radial reinforcing element (95) that is situated 30 mm from the radially innermost point of the bead wire (92).

6. Tyre according to any one of Claims 3 to 5, wherein the radially outermost point of the bead filler (97) is at a distance at least equal to 30 mm from the radially innermost point of the bead wire (92), preferably at least equal to 45 mm.

7. Tyre according to any one of the preceding claims, wherein the radial reinforcing element (95) is made up of the turned-back strand of the axially innermost carcass layer (9).

8. Tyre according to any one of the preceding claims, wherein the axially innermost points of the radial reinforcing element (95) are axially on the inside of the axially outermost points of the crown layers (41, 42, 5) and on the same radius as the reinforcing elements of the radially innermost carcass layer (9).

9. Tyre according to any one of the preceding claims, wherein two carcass layers connect the two beads.

10. Tyre according to the preceding claim, wherein the two carcass layers are situated on the same radii for all the points axially on the inside of the axially outermost point of the crown layers and radially on the outside of the axially outermost point of the tyre.

11. Tyre according to any one of the preceding claims, wherein the central undulation or undulations (51) of the radially outermost layer of reinforcing elements (5) are such that, over at least 10% of the radially outer surface (ROS) of said crown layer (5) aligned with the central part of the tread, the radial distance (do) between the radially outer surface (ROS) of the radially outermost crown layer (5) and the tread surface (21) at said undulation is at at least 1 mm less than the radial distance (dc) between the radially outer surface (ROS) of the radially outermost crown layer (5) and the tread surface (21), which is the distance vertically beneath the bottom face of the circumferential groove (24) closest to the relevant point on said surface.

12. Tyre according to any one of the preceding claims, wherein the part of the carcass layer vertically beneath the central part of the tread is radially on the outside of all the points of the carcass layer vertically beneath the ends of the crown layers.

13. Tyre according to any one of the preceding claims, wherein the minimum radial distance (do) between the radially outer surface (ROS) of the radially outermost layer of the crown reinforcement and the tread surface is at most equal to the depth D of the closest circumferential groove plus 2 mm and at least equal to the depth D of the closest circumferential groove minus 2 mm, and preferably substantially equal to the depth D of the closest circumferential groove.
